# FASCICULE DE BREVET EUROPEEN

(11) **EP 2 582 537 B1**
(45) Date de publication et mention de la délivrance du brevet: **12.03.2014**
(21) Numéro de dépôt: 10760300.3
(22) Date de dépôt: 22.09.2010
(51) Int. Cl.: B60J 1/16

(54) **DISPOSITIF D'OBTURATION D'UNE BAIE A ELEMENTS SOUPLES DE RETENUE**
VORRICHTUNG ZUR VERRIEGELUNG EINER ÖFFNUNG MIT FLEXIBLEN HALTERUNGSELEMENTEN
DEVICE FOR CLOSING OFF AN OPENING HAVING FLEXIBLE RETAINING ELEMENTS

(30) Priorité: 21.06.2010 FR 1054926
(43) Date de publication de la demande: 24.04.2013
(73) Titulaire: Advanced Comfort Systems France SAS - ACS France, 79302 Bressuire Cedex (FR)
(72) Inventeur: JINCHELEAU, Michel, F-79320 Moncoutant (FR); LEBOEUF, Régis, F-85130 Les Landes Genusson (FR)
(74) Mandataire: Bioret, Ludovic
(86) Numéro de dépôt international: PCT/EP2010/063992
(87) Numéro de publication internationale: WO 2011/160701

(56) Documents cités:
- EP-A1- 1 621 379
- EP-A1- 2 189 313
- FR-A1- 2 787 498
- FR-A1- 2 937 669
- JP-U- 50 049 116

## Description

### 1. Domaine de l'invention

Le domaine de l'invention est celui de l'équipement des baies, utilisées notamment dans les véhicules automobiles. Plus précisément, l'invention concerne les dispositifs d'obturation d'une baie ménagée dans un élément de structure, par exemple dans la carrosserie d'un véhicule, ou dans une portière du véhicule, et comprenant une partie mobile coulissante susceptible de libérer ou de fermer une ouverture en offrant un aspect affleurant, vu de l'extérieur. L'invention peut également équiper d'autres types de structures, tels que les caravanes, les camping-cars, les cars et bus, les minibus, les camions, les camionnettes, les bateaux,...

De tels dispositifs, développés depuis plusieurs années par le titulaire de la présente demande, sont notamment connus sous le terme "baie flush". En d'autres termes, ces dispositifs sont conçus de façon à présenter, vu de l'extérieur, un aspect affleurant ou quasi-affleurant entre la carrosserie, ou plus généralement la paroi ou la structure, et le panneau fixe du dispositif.

### 2. Techniques de l'art antérieur

Le principe de cette technique est notamment décrit dans les documents de brevet EP-0 778 168 et EP-0 857 844. Le document FR 2 787 498 A1 décrit le préambule de la revendication 1. Le dispositif d'obturation (appelé par la suite "baie flush") présenté dans ces documents comprend une partie fixe et une partie mobile par rapport à cette partie fixe, ou panneau coulissant. La partie mobile est reliée à l'ensemble fixe par des éléments fonctionnels qui assurent la mobilité requise et qui sont rapportés sur la face de la partie fixe tournée vers l'intérieur du véhicule.

Ces éléments fonctionnels, ou rails, assurent une fonction de guidage et de maintien du panneau mobile. Ils sont placés sur la face orientée vers l'intérieur du véhicule, de façon suffisamment éloignés des bords, ou de la périphérie, de la partie fixe pour que cette périphérie puisse être solidarisée directement aux bords de la baie, sans que les rails n'interfèrent. On peut ainsi s'affranchir de la présence d'un cadre de liaison entre les bords de la baie et la partie fixe.

Cette partie fixe peut être réalisée en un ou plusieurs éléments (placés les un à côté des autres dans un même plan), par exemple en verre ou en polycarbonate.

Une telle baie flush peut ainsi être montée intégralement indépendamment du véhicule, et rapportée, depuis l'extérieur, dans le logement défini à cet effet par la baie, ou le logement, définie dans la carrosserie, ou plus généralement dans la paroi. Les bords de la partie fixe sont solidarisés, par exemple à l'aide d'un cordon de colle, aux bords de la baie, sans autre élément intermédiaire de liaison.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer un coulissement de la partie mobile, constituée généralement par un panneau transparent, on prévoit donc un dispositif de guidage comportant un premier et un second rails de guidage montés fixes sur la partie fixe (ou structure fixe) de la baie, de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position de fermeture, dans laquelle il obture l'ouverture.

Pour maximiser l'aspect affleurant, il a été proposé que, dans la position de fermeture, le panneau mobile s'inscrive dans le plan de la partie fixe, en passant d'une position intermédiaire de dégagement, dans le plan de coulissement, en regard de l'ouverture et dégagé de celle-ci à la position de fermeture.

On notera que le terme « plan » doit ici s'entendre dans une acception élargie : le plan formé par la baie est parfois courbe, selon une, voire deux, directions (ceci justifie également, dans certains cas, le terme « sensiblement » utilisé dans la description et les revendications).

### 3. Inconvénients des solutions de l'art antérieur

Les baies flush remportent un succès important, dans de nombreuses applications, du fait notamment de la simplicité de leur fabrication et de leur montage, et de l'aspect esthétique qu'elles permettent d'obtenir.

Cependant, elles introduisent des risques importants, en matière de sécurité, si certaines précautions ne sont pas prises. En effet, les rails ne sont fixés qu'à la partie fixe de la baie flush et non, comme ceci était le cas auparavant, à un cadre qui est lui-même fixé à la carrosserie. De ce fait, en cas de bris de la partie fixe, dû par exemple à un accident ou à la réception d'un projectile, par exemple un gravillon envoyé par un autre véhicule, les rails et surtout le panneau mobile ne sont plus maintenus (la partie fixe, notamment lorsqu'elle est en verre, se disloquant en une multitude de morceaux de petite taille) et peuvent devenir des éléments très dangereux pour les occupants du véhicule. Par exemple, le panneau mobile, qui n'est plus maintenu, devient une pièce libre pouvant être projetée à l'intérieur du véhicule.

Cette situation n'est bien sûr pas acceptable, et est interdite par la normalisation, notamment au niveau européen. Ainsi, le règlement européen EC43 précise que, dans une telle situation de bris de verre, les éléments projetés doivent être taille réduite, inférieure à 3 cm², ce qui n'est bien sûr pas le cas du panneau mobile, qui constitue l'un des éléments projetés, lorsque la partie fixe est brisée.

Le Titulaire de la présente demande a pris en compte ce risque, dès l'origine, et a proposé une solution, présentée dans le document EP-0 778 168 sus-mentionné. Cette solution consiste à prévoir des prolongements, qui s'étendent depuis les rails jusqu'au bord de la partie fixe (plus précisément, jusqu'à la zone de solidarisation de cette partie fixe avec les bords de la baie ménagée dans la carrosserie ou la structure du véhicule).

Ainsi, ces prolongements se trouvent, lors du montage sur le véhicule, placés (pris en sandwich) entre le bord de la baie et le bord du panneau fixe, et recouvert par le cordon de collage (dans le cas d'une solidarisation par collage). Les dimensions de ces prolongements sont suffisamment réduites pour ne pas perturber l'efficacité de la solidarisation de la partie fixe au bord de la baie, ni l'étanchéité. En cas de bris de la partie fixe, ces prolongements restent collés au bord de la baie. De ce fait, les rails restent en place, de même que le panneau mobile, évitant les risques de blessures pour les occupants du véhicule, dus à une projection de ces éléments.

Dans le mode de réalisation illustré dans le document EP-0 778 168, ces prolongements s'étendent selon l'axe des rails. Le Titulaire a ensuite développé des prolongements qui s'étendent perpendiculairement aux rails (vers le haut pour le rail supérieur et vers le bas pour le rail inférieur). De tels prolongements sont présents sur différents véhicules depuis l'année 1998. Il a également proposé des variantes de montage (prolongements solidarisés au rail, par exemple par clippage) et des applications complémentaires, telle que l'évacuation de l'eau.

Cette technique est efficace, mais présente cependant certains inconvénients. Tout d'abord, elle suppose une conception et une fabrication spécifique pour chaque type de baie. En effet, les dimensions et l'emplacement des prolongements, et plus généralement des rails, est spécifique à chaque baie, en fonction notamment des dimensions de la baie (et donc de la partie fixe) et de la position et des dimensions de l'ouverture dans la baie.

Par ailleurs, sur le plan de la sécurité, cette technique peut être insuffisante. En effet, la rigidité des prolongements peut dans certains cas être insuffisante pour maintenir parfaitement en place les rails, et dans ce cas, le panneau mobile peut se désolidariser des rails, et devenir malgré les prolongements, un projectile.

Enfin, le coût de fabrication d'une telle baie flush, et de ces équipements complémentaires de sécurité, reste relativement élevé, notamment pour la construction de véhicules à faible coût et/ou présentant des configurations variées, supposant des formes variables de baies.

### 4. Objectifs de l'invention

L'invention a donc notamment pour objectif de pallier les inconvénients de l'art antérieur cités ci-dessus.

Plus précisément, l'invention a pour objectif de proposer une technique permettant d'améliorer la sécurité des occupants d'un véhicule équipé d'une ou plusieurs baies flush.

Un autre objectif de l'invention est de fournir une telle technique, qui soit simple et peu coûteuse à mettre en oeuvre, lors de la fabrication et/ou du montage sur un véhicule.

L'invention a également pour objectif de fournir une telle technique, selon au moins un mode de réalisation, qui permette de façon simple et efficace la fabrication de baies flush de différentes dimensions.

Selon au moins un mode de réalisation, l'invention a également pour objectif de fournir une telle technique, assurant une étanchéité efficace tout en permettant l'évacuation de l'eau de condensation apparaissant à l'intérieur du véhicule.

Encore un autre objectif de l'invention est de fournir une telle technique qui conserve autant que faire se peut tout ou partie des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

### 5. Principes généraux de l'invention

Ces objectifs, ainsi que d'autres qui apparaîtront par la suite, sont atteints à l'aide d'un dispositif d'obturation d'une baie ménagée dans une structure, ou baie flush, comprenant une partie fixe essentiellement plane, dans laquelle est définie une ouverture, et au moins un panneau coulissant guidé le long de deux rails montés sur une face dudit panneau fixe, entre au moins une position de fermeture, obturant ladite ouverture, et une position d'ouverture, libérant ladite ouverture.

Selon l'invention, au moins un desdits rails porte, à chacune de ses extrémités, un embout de fermeture auquel est solidarisée une première extrémité d'un premier élément souple ou semi-rigide dont la seconde extrémité est destinée à être solidarisée à ladite structure.

L'expression « souple ou semi-rigide » s'oppose ici à « rigide », et suppose donc une capacité à tolérer un déplacement (au moins léger), du rail et du panneau mobile.

Ainsi, en cas de bris de la partie fixe, ce rail reste suspendu au bord de la baie, maintenant le panneau en fixe, de façon qu'il ne soit pas libéré et projeté dans, ou à l'extérieur de, la structure. Cependant, il n'est pas nécessaire de prévoir, pour chaque type, notamment chaque dimension, de rail des moyens particuliers, en des emplacements spécifiques. En effet, les éléments souples ou semi-rigides sont solidaires d'embout, et non directement des rails. Ceci permet de découper les rails à la dimension souhaitée, puis de rapporter les embouts à leurs extrémités.

Ledit rail peut notamment être réalisé dans un profilé, apte à être découpé à différentes longueurs.

Chaque élément souple ou semi-rigide peut par exemple être une sangle ou un câble.

Chaque élément souple ou semi-rigide est préférentiellement dimensionnée de façon que ladite seconde extrémité puisse être collée au bord de ladite baie, à l'aide d'un cordon de colle destiné à solidariser ladite partie fixe à ladite structure.

Lesdits embouts de fermeture peuvent être solidarisés audit rail par clippage et/ou vissage, ce qui permet un démontage rapide et aisé.

Selon un mode de réalisation particulier, ladite première extrémité forme une boucle autour d'un doigt de maintien formé dans ledit embout. Cette approche permet un assemblage simple et efficace. D'autres techniques de solidarisation (collage, pincement, soudage, ...) sont bien sûr envisageables.

Selon un mode de mise en oeuvre, au moins un desdits embouts est solidaire d'un second élément souple ou semi-rigide s'étendant jusqu'à un embout d'un deuxième rail, de façon à relier les deux rails.

Ceci permet de retenir non seulement le premier rail, mais également le second, et donc de renforcer la sécurité. Il est également possible de prévoir que les éléments souples ou semi-rigides s'étendent sur toute la hauteur de la baie, pour maintenir les deux rails. Il est aussi possible que chaque rail soit retenu par ses propres éléments souples ou semi-rigides.

Selon un mode de réalisation particulier, au moins un desdits rails et/ou ledit panneau coulissant porte des moyens anti-dégondage, empêchant la désolidarisation dudit rail et dudit panneau coulissant.

De cette façon, même en cas de choc relativement important, et de déplacement (par exemple un mouvement de balancier) du rail, le panneau mobile reste suspendu au bord la baie.

Notamment, lesdits moyens anti-dégondage peuvent comprendre des éléments complémentaires, formés d'une part sur ledit rail et d'autre part sur un cadre dudit panneau coulissant, de façon à supprimer ou limiter au moins un degré de liberté entre ledit rail et ledit cadre (dans une direction essentiellement verticale).

Selon une variante, lesdits moyens anti-dégondage peuvent comprendre des éléments complémentaires, formés d'une part sur ledit rail et d'autre part sur un support de louvoiement solidaire du cadre dudit panneau coulissant, de façon à supprimer ou limiter au moins un degré entre ledit rail et ledit cadre.

Selon un autre aspect de l'invention, un joint perméable peut être placé entre ladite partie fixe et ledit rail inférieur.

Un tel joint permet, du fait de sa perméabilité, d'évacuer l'eau de condensation, mais assure une barrière efficace contre les liquides venant de l'extérieur, notamment via un jet sous pression.

Ledit joint peut en particulier être réalisé en mousse à cellules ouvertes.

Selon un mode de réalisation particulier, ledit joint est placé au-dessus d'au moins un passage d'eau percé dans ladite partie fixe. Ainsi, l'eau de condensation, après avoir traversé le joint, peut être évacuer vers l'extérieur, via ce ou ces passages.

Un tel dispositif selon l'invention peut être mis en oeuvre sur de nombreux types de structures et/ou de parois présentant une baie. Notamment, l'invention concerne les véhicules automobiles comprenant au moins un dispositif d'obturation tel que décrit ci-dessus.

### 6. liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 illustre une baie flush selon l'invention, vue du côté correspondant à l'intérieur du véhicule dans lequel elle sera montée ;
- la figure 2 illustre le maintien du panneau coulissant de la figure 1, selon ce mode de réalisation de l'invention, en cas de bris de la partie fixe ;
- les figures 3A et 3B sont des vues en éclaté des différents éléments constitutifs respectivement de la partie fixe et du panneau coulissant des figures 1 et 2 ;
- la figure 4 présente un premier mode de réalisation d'un embout selon l'invention ;
- les figures 5A et 5B illustrent un second mode de réalisation d'un embout selon l'invention, la figure 5B étant une vue en coupe ;
- les figures 6A et 6B présentent deux variantes de mise en oeuvre, dans lesquelles le rail inférieur est également maintenu par des sangles ;
- les figures 7A à 7D illustrent schématiquement quatre modes de maintien des rails supérieur et/ou inférieur ;
- les figures 8A et 8B présentent un mode de réalisation de moyens anti-dégondage ;
- les figures 9A à 9C illustrent la mise en oeuvre de moyens d'étanchéité perméable, au niveau du rail inférieur.

### 7. Description d'un mode de réalisation particulier

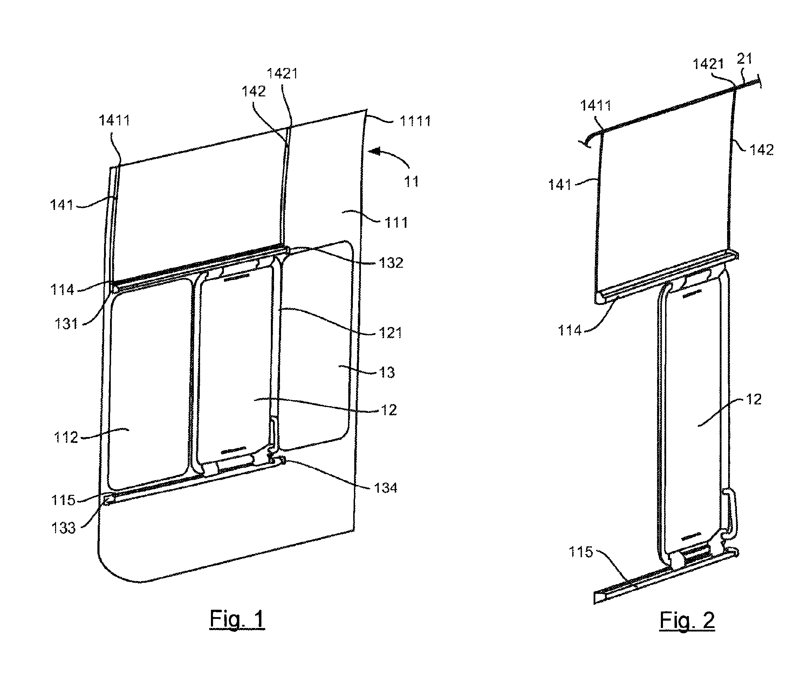

Comme on le voit sur la figure 1, qui présente une baie flush à panneau mobile en coulissement, une baie flush se présente sous la forme d'un ensemble, ou dispositif d'obturation, prêt à être placé dans une baie (c'est-à-dire une ouverture, ou un trou) ménagée dans la carrosserie ou une porte, ou plus généralement dans la structure, d'un véhicule, ou plus généralement d'une paroi devant recevoir un dispositif d'obturation muni d'un ouvrant.

Un tel dispositif d'obturation comprend donc une partie fixe 11, c'est-à-dire restant immobile par rapport à la structure qui la reçoit, et un panneau mobile en coulissement, ou panneau coulissant, 12, mobile par rapport à la partie fixe 11.

La partie fixe 11 peut notamment être réalisée en verre ou en polycarbonate, en un ou plusieurs éléments. Dans le mode de réalisation de la figure 1, elle comprend un élément structurel 111, définissant le contour du dispositif (destiné à coïncider avec le contour 1111, ou le périmètre, de la baie). Cet élément est généralement opaque, et par exemple recouvert de sérigraphie.

On note que le contour 1111 est libre de tout élément, et notamment d'un cadre de liaison ou d'éléments similaires de liaison avec la carrosserie ou la paroi, de façon à permettre un collage de la partie fixe directement sur les bords de la baie. D'autres modes de fixation peuvent bien sûr être envisagés.

L'élément structurel 111, réalisé par exemple en polycarbonate, est, dans ce mode de réalisation, percé de trois ouvertures. Deux d'entre elles sont obturées, de façon fixe, par deux panneaux 112 et 113, par exemple en verre. Ainsi, la partie fixe est formée par les trois éléments 111, 112 et 113, s'étendant dans un même plan.

Des rails, respectivement un rail supérieur 114 et un rail inférieur 115, sont rapportés sur la face de la partie fixe 11 orientée vers l'intérieur du véhicule. On note que ces rails sont éloignés du contour de la partie fixe, et ne participent pas ni ne nuisent à la solidarisation de celle-ci au bord de la baie.

Les rails 114 et 115 maintiennent et guident en coulissement le panneau coulissant 12, qui présente un cadre 121 relié aux rails.

Selon l'invention, le rail supérieur 114 présente, à chacune de ces extrémités, un embout de fermeture 131, 132. Ainsi, il est possible d'obtenir plusieurs dimensions de rail, sans difficulté. Le rail 114 est réalisé dans un profilé, par exemple en aluminium, et découpé à la longueur souhaitée. On rapporte ensuite les embouts 131, 132.

Il en est de même pour le rail inférieur 115, muni des embouts 133 et 134.

Ainsi, avec une même base (profilé aluminium), on peut équiper des baies de dimensions variées et/ou présentant des ouvertures de dimensions variées. Il est également aisé de s'adapter à un coulissement vers la droite et/ou vers la gauche, en fonction des besoins.

Selon l'invention, au moins les embouts 131 et 132 du rail supérieur sont équipés de sangles 141, 142, par exemple en polyuréthane, ou plus généralement d'éléments souples ou semi-rigides, pouvant par exemple être des câbles, des bandes de tissu armé, un lien équipé d'une armature métallique,...

Ces sangles 131 et 132 s'étendent le long de la partie fixe 11, ici verticalement, jusqu'à attendre le bord 1111 de la partie fixe. De cette façon, les extrémités supérieures 1411, 1421 des sangles seront collées au bord de la baie, lors du collage du dispositif à celle-ci. Il est bien sûr possible de prévoir que ces sangles s'étendent horizontalement, ou selon un angle quelconque. On peut prévoir des moyens de fixation temporaire, par exemple adhésifs, pour maintenir les sangles le long de la partie fixe avant la solidarisation aux bords de la baie.

Ainsi, comme illustré par la figure 2, en cas de bris de la partie fixe 11 (qui n'apparaît donc plus sur la figure 2), le panneau fixe 12 restera suspendu au bord de la baie 21, qui est ici le bord de la carrosserie, ou un longeron.

Les sangles 141 et 142 sont solidarisées, par leurs extrémités 1411 et 1412, au bord de la baie 21. Elles retiennent donc le rail supérieur 114, qui retient lui-même le panneau coulissant 12, qui retient lui-même le rail inférieur 115. On comprend donc que, même lorsque la partie fixe 11 disparaît, ces différents éléments restent solidaires du bord de la baie, et donc de la structure. Ils ne sont pas libérés ni projetés, de façon à assurer la sécurité des personnes à proximité.

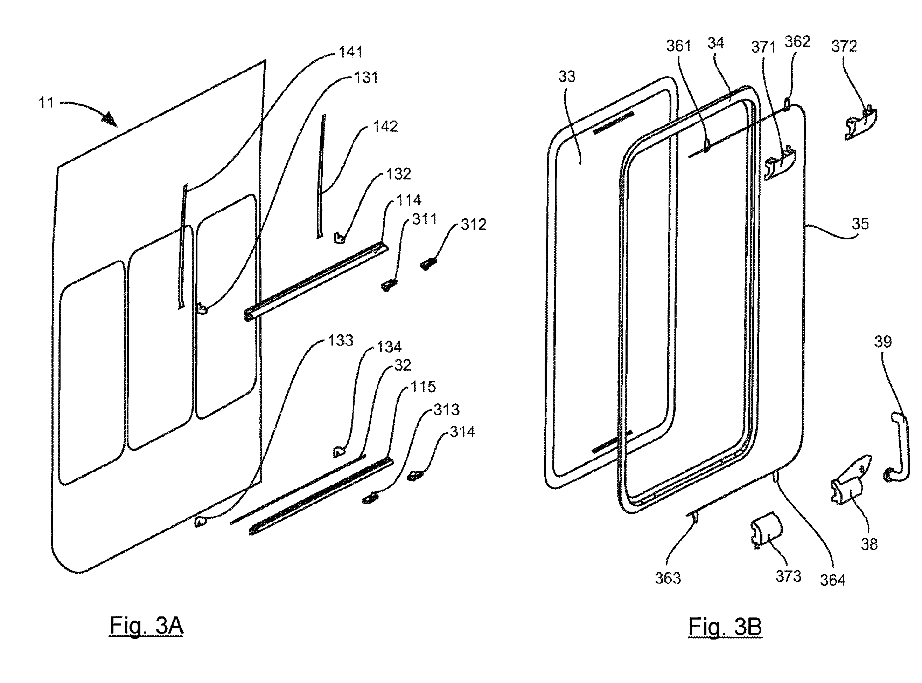

La figure 3A détaille les éléments constitutifs de l'ensemble fixe, qui comprend, outre la partie fixe 11 décrite ci-dessus, les deux sangles 141 et 142, les deux embouts supérieurs 131 et 132, le rail supérieur 114, le rail inférieur 115, et ses deux embouts inférieurs 133 et 134.

Les différents embouts sont de préférence équipés d'un joint d'étanchéité, empêchant que l'eau recueillie dans le rail ne sorte par ses extrémités, et/ou que de l'eau ne pénètre par ces extrémités dans le rail. Ils peuvent être clippés et/ou vissés, ou plus généralement solidarisés aux rails par tous moyens adéquats. Préférentiellement, on choisira un mode de fixation permettant un démontage aisé.

Dans ce mode de réalisation, le rail supérieur 114 porte deux navettes 311, 312, et le rail inférieur 113 deux navettes 313, 314, ainsi qu'une butée de louvoiement 315. La mise en oeuvre de ces moyens, en coopération avec les moyens correspondant prévus sur le panneau coulissant, illustrés sur la figure 3B, n'est pas décrite en détail ci-après. Elle est présentée dans la demande de brevet PCT/EP2010/058752, déposée le même jour que la présente demande, et incorporée par référence.

On note également la présence optionnelle d'un joint d'écoulement d'eau 32, décrit plus en détail par la suite.

La partie mobile, illustrée par la figure 3B, comprend donc une vitre 33, montée sur, ou assemblée avec, un cadre 34, par exemple en aluminium cintré dont les jonctions sont brasées. Ce cadre 34 porte un câble crémaillère 35, ou un clinquant, sur lequel sont montés quatre doigts de transmission du mouvement identiques, deux doigts supérieurs 361, 362 prévus pour coopérer respectivement avec les navettes 311 et 312, et deux doigts inférieurs 363, 364 prévus pour coopérer respectivement avec les navettes 313 et 314.

Trois supports de louvoiement identiques 371, 372 et 373 sont montés sur le cadre 34. Un quatrième support 38, légèrement différent, porte une poignée 39 permettant le verrouillage et le contrôle du coulissement du panneau mobile. La mise en oeuvre de ces différents éléments est détaillée dans le document PCT/EP2010/058752 sus-mentionné.

D'autres mécanismes de guidage, et notamment ceux décrits dans différents documents de brevet au nom du titulaire de la présente demande de brevet, peuvent bien sûr être mis en oeuvre sans sortir du cadre de l'invention.

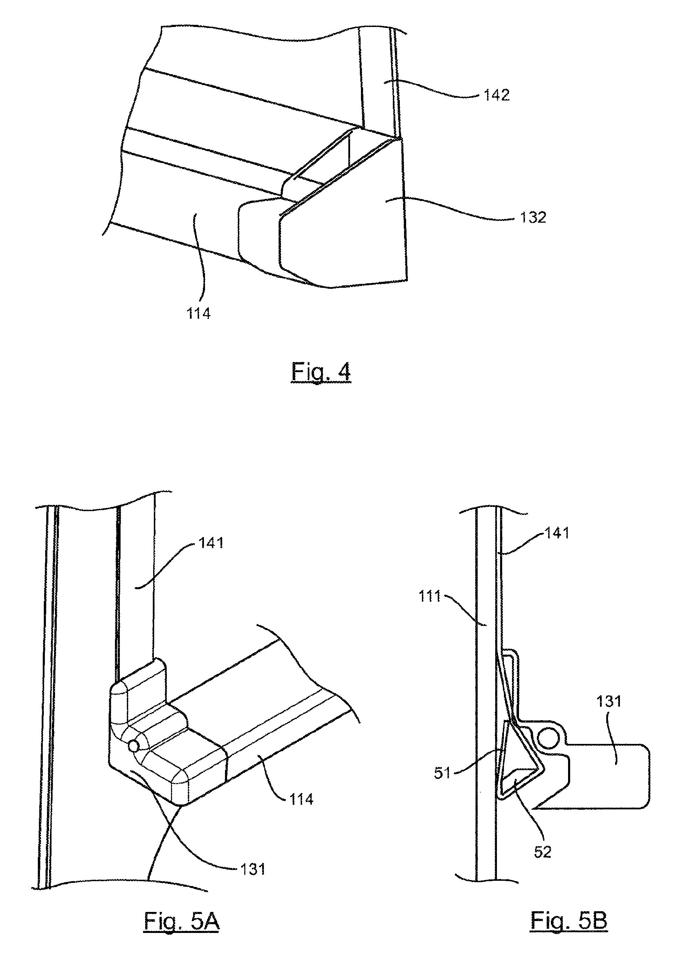

La figure 4 illustre un premier exemple d'embout 132 équipant le rail supérieur 114, et à partir duquel s'étend la sangle 142. La figure 5A présente une autre forme d'embout 131, à partir duquel s'étend la sangle 141.

Dans ce dernier mode de réalisation, et comme illustré par la figure 5B, la sangle 141 peut former une boucle 51, ou un ourlet, autour d'un doigt 52 s'étendant horizontalement et solidaire de l'embout 131. Cette approche permet un assemblage simple et efficace. Bien sûr, d'autres modes de solidarisation peuvent être envisagés, tels que le collage, le pincement, le soudage, ...

Comme illustré par la figure 2, les rails et le panneau coulissant restent solidaires, même en cas de bris du panneau fixe. Cependant, dans certains modes de réalisation, l'ensemble ainsi suspendu peut effectuer un mouvement de balancement, qui peut être dangereux pour les occupants. De même, dans certains modes de réalisation, il peut apparaître un risque de désolidarisation, sous l'effet d'un choc et/ou du balancement.

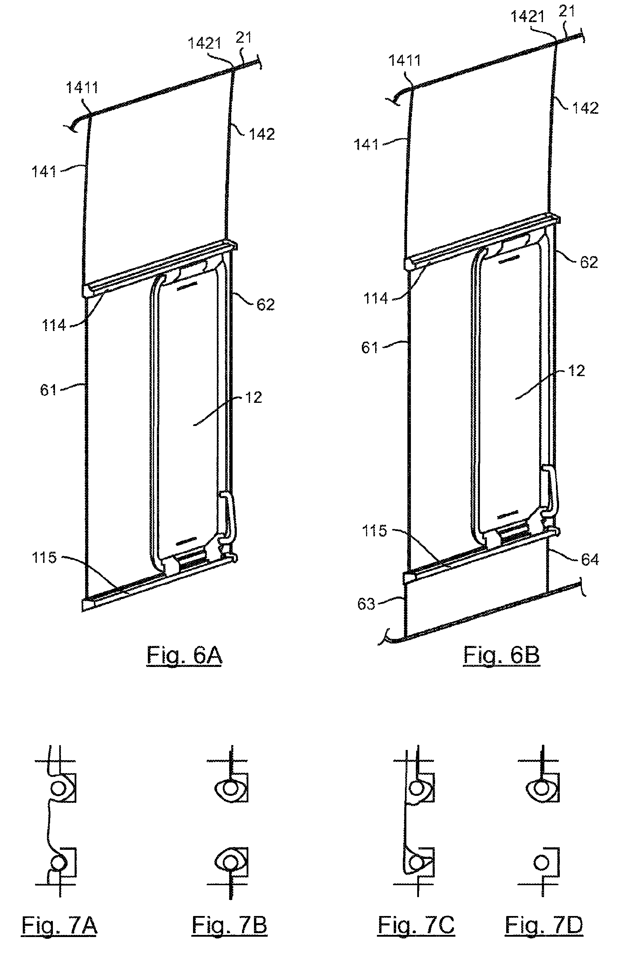

De ce fait, il peut être souhaitable non seulement de retenir le rail supérieur, mais également de maintenir, ou à tout le moins de contrôler, le déplacement de l'ensemble suspendu (un mouvement contrôlé permettant d'absorber de l'énergie). Pour ceci, comme illustré par la figure 6A, on peut prévoir de relier les rails supérieur 114 et inférieur 115 par des sangles 61, 62. Ainsi, en cas de bris de la partie fixe, la distance entre les rails reste sensiblement constante, et on limite le risque de désolidarisation du panneau mobile.

Les sangles 61 et 62 peuvent être des sangles distinctes, ou constituer le prolongement des sangles 141, 142 respectivement.

Selon une autre variante, illustrée par la figure 6B, le rail inférieur 115 peut lui-même être relié au bord inférieur de la baie, par des sangles 63, 64. A nouveau, il peut s'agir de sangles distinctes, ou de prolongements des sangles 141, 142 respectivement. Dans ce dernier cas, les sangles 141 sont maintenues par leurs deux extrémités au bord de la baie (plus précisément au bord supérieur et au bord inférieur de la baie), et tendues. Les rails sont solidarisés à ces sangles, et donc efficacement maintenus même en cas de bris de la partie fixe.

Les figures 7A à 7D résument schématiquement quatre modes de mise en oeuvre envisageables :
- figure 7A : les sangles s'étendent entre les bords supérieur et inférieur de la baie, et est solidarisée aux deux rails ;
- figure 7B : le rail supérieur est relié au bord supérieur de la baie par deux premières sangles, et le rail inférieur est relié au bord inférieur de la baie par deux secondes sangles ;
- figure 7C : le rail supérieur est relié au bord supérieur de la baie par deux premières sangles, et le rail inférieur est relié au rail supérieur ;
- figure 7D : seul le rail supérieur est maintenu par des sangles.

Par ailleurs, toujours dans le but d'assurer une solidarisation efficace entre le panneau mobile et les rails, on peut prévoir des moyens anti-dégondage, c'est-à-dire des moyens s'opposant à la désolidarisation d'un rail et du cadre du panneau mobile.

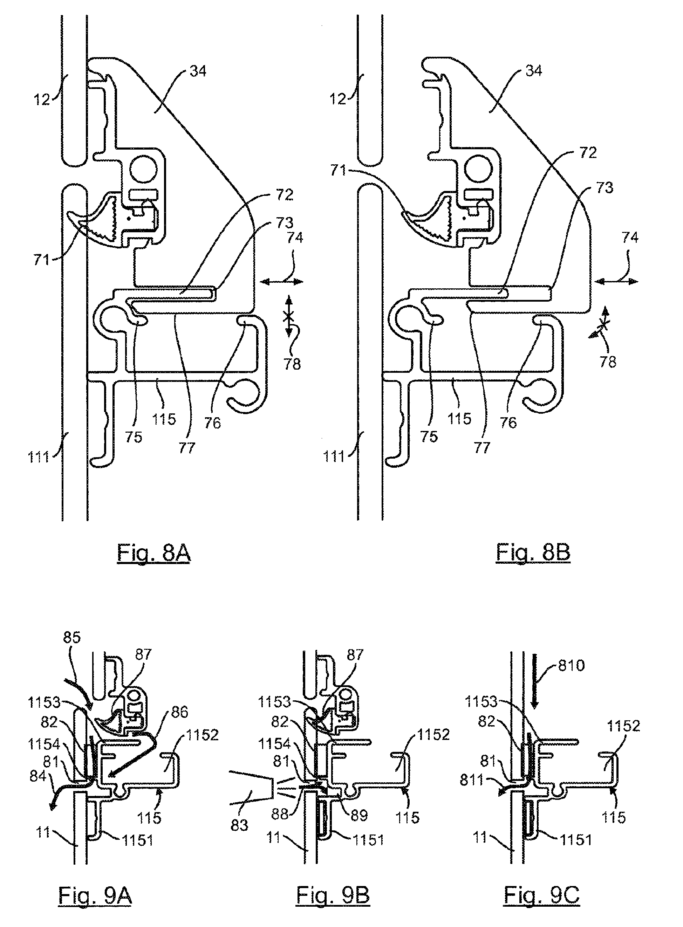

Les figures 8A et 8B sont des vues en coupe illustrant une telle solution, respectivement en position fermée et en position ouverte. Elles présentent le rail inférieur 115, solidarisé à la partie fixe 111. Le panneau coulissant 12 porte le cadre 34, équipé notamment d'un joint d'étanchéité 71.

Le rail 115 présente une lame anti-dégondage 72 s'étendant horizontalement, en sa partie supérieure, et venant s'inscrire dans un logement 73 correspondant, formé dans le support de louvoiement solidarisé au cadre 34. Cet assemblage permet de contrôler le déplacement en coulissement du panneau mobile, le long de la lame 72.

Il autorise aussi un déplacement de louvoiement, le cas échéant (flèche 74), permettant le passage de la position fermée (figure 8A) à la position ouverte (figure 8B).

Le rail 115 présente par ailleurs deux zones de blocage 75, 76, s'étendant sous la partie inférieure 77 du cadre 34. La combinaison des éléments 72, 73, 75, 76 et 77 empêche tout déplacement important verticalement (flèche 78) et en conséquence la désolidarisation (dégondage) du panneau coulissant et du rail inférieur 115.

Un mécanisme similaire peut bien sûr être mis en oeuvre pour le rail supérieur.

Selon un autre aspect de l'invention, il est souhaitable, dans certains modes de réalisation, d'apporter des solutions efficaces pour assurer l'étanchéité de la baie et l'évacuation de l'eau de condensation pouvant apparaître sur la face intérieure de la baie. Ceci regroupe au moins trois aspects :
- garantir l'étanchéité la plus parfaite possible, lorsque le panneau mobile est fermée, pour éviter que de l'eau ne pénètre dans le véhicule, y compris en présence d'un jet d'eau sous pression, qui peut s'introduire dans l'espace entre le panneau mobile et la partie fixe ou par des trous d'évacuation d'eau percés dans la partie fixe ;
- assurer l'évacuation de l'eau (par exemple en cas de pluie ou de projection d'eau) pouvant pénétrer par l'ouverture, lorsque le panneau mobile est ouvert ;
- assurer l'évacuation de l'eau de condensation apparaissant sur la face intérieure de la baie, lorsque le panneau mobile est fermé.

Le titulaire de la présente demande de brevet a développé une solution particulière à ce problème, décrit dans le document de brevet EP- 1 048 501. Cette solution est bien adaptée à certaines situations, mais ne permet pas des adaptations simples et rapides à différents types de baie. Elle n'est par ailleurs pas aisée à mettre en oeuvre dans le cas de rails formés dans des profilés, pouvant être coupés à plusieurs dimensions. En effet, les rails doivent être prévus, dès l'origine, pour diriger l'eau vers les passages d'eau connectés à des points particuliers du rail.

Pour pallier cet inconvénient, il est proposé, selon certains modes de réalisation, de mettre en oeuvre une portion de joint d'écoulement d'eau, le long du rail inférieur. Comme ceci apparaîtra à la lecture de la description suivante, cette approche peut être mise en oeuvre indépendamment de l'utilisation de sangles ou éléments similaires tels que décrits ci-dessus.

On prévoit en effet un joint d'écoulement d'eau 32 s'étendant entre la partie fixe 11 et le rail inférieur 115 (voir figure 3A). Ce joint 32 assure une barrière perméable, c'est-à-dire qu'il assure deux fonctions, pouvant a priori apparaître opposées, lorsque le panneau coulissant est fermé :
- empêcher toute remontée d'eau due à un jet extérieur ;
- permettre l'évacuation de l'eau de condensation.

Pour ceci, on utilise un joint formant une barrière perméable, réalisé par exemple dans une mousse à cellules ouvertes, présentant par exemple une section de 12 mm sur 6 mm.

La mise en oeuvre de ce joint est illustrée par les figures 9A à 9C. Il s'agit de vue en coupe, en un emplacement où les supports de louvoiement (figure 3B) ne sont pas présents.

La partie fixe 11 est percée de trous d'évacuation d'eau 81, par exemple au nombre de trois. Le rail inférieur 115 est collé à cette partie fixe, par une portion de liaison 1151, au-dessous de ces trous d'évacuation 81. Le rail 115 présente également une partie supérieure 1152 de recueil d'eau, qui est ensuite évacuée vers les trous d'évacuation 81, par l'intermédiaire de trous d'évacuation du rail, non représentés et placés de façon décalée par rapport aux trous d'évacuation 81.

Le rail 115 présente une paroi verticale 1153, parallèle à la partie fixe 11 (mais non plaquée contre celle-ci), et définissant avec celle-ci un logement pour le joint d'écoulement d'eau 82. Une légère extension 1154 peut être prévue, pour soutenir et aider au placement du joint 84. Elle permet également de réduire la zone de passage d'eau, et de briser un jet d'eau sous pression.

Comme on le voit sur la figure 8A, illustrant le panneau mobile 12 en position ouverte, l'eau peut pénétrer (flèche 85) à l'intérieur du véhicule, par l'espace créé par le décalage du panneau mobile 12 par rapport à la partie fixe 111. Une partie de cette eau peut ruisseler sur la partie supérieure du rail, pour être dirigé à l'intérieur du rail 115 (flèche 86). Cette eau est ensuite évacuée par les trous d'évacuation ménagés dans le rail, puis par les trous d'évacuation 81. Une autre partie de l'eau peut tomber sur le joint 84 et s'écouler vers l'extérieur dans ce joint 84 (flèche 86). En effet, ce joint 84 est perméable, et permet le passage de l'eau et/ou son évaporation. En d'autres termes, le joint se comporte comme une éponge.

Lorsque le panneau mobile 12 est fermé, comme illustré par la figure 8B, l'étanchéité entre le panneau mobile 12 et la partie fixe 111 est assurée, classiquement, par un joint d'étanchéité 87. Cependant, l'eau venant de l'extérieur, notamment via un jet de nettoyage sous pression, peut pénétrer (88) par le trou 81. Cependant, cette eau reste dans l'espace 89, et ressort par le trou 81. Le joint 84 forme alors une barrière, empêchant toute remontée d'eau.

En revanche, comme illustrée par la figure 8C, l'eau de condensation apparaissant sur la face tournée vers l'intérieur du véhicule (flèche 810) tombe sur le joint 84. Ce joint perméable permet le passage de l'eau et/ou son évaporation (flèche 811).

On dispose ainsi d'une solution efficace pour l'évacuation de l'eau de condensation (qu'il n'est plus nécessaire de recueillir dans le rail), et permettant également d'assurer efficacement l'étanchéité.

## Revendications

1. Dispositif d'obturation d'une baie ménagée dans une structure (111), comprenant une partie fixe (11) essentiellement plane, dans laquelle est définie une ouverture, et au moins un panneau coulissant (12) guidé le long de deux rails (114, 115) montés sur une face dudit panneau fixe, entre au moins une position de fermeture, obturant ladite ouverture, et une position d'ouverture libérant ladite ouverture, **caractérisé en ce qu'**au moins un desdits rails (114, 115) porte, à chacune de ses extrémités, un embout de fermeture (131, 132) auquel est solidarisée une première extrémité d'un premier élément souple ou semi-rigide (141, 142) dont la seconde extrémité est destinée à être solidarisée à ladite structure (111), ledit élément souple ou semi-rigide étant dimensionné de façon que ladite seconde extrémité puisse être collée au bord de ladite baie, à l'aide d'un cordon de colle destiné à solidariser ladite partie fixe à ladite structure,
et ledit élément souple ou semi-rigide (141, 142) étant une sangle, un câble, une bande de tissu armé ou un lien équipé d'une armature métallique.

2. Dispositif d'obturation selon la revendication 1, **caractérisé en ce que** ledit rail (114, 115) est réalisé dans un profilé, apte à être découpé à différentes longueurs.

3. Dispositif d'obturation selon l'une quelconque des revendications 1 à 2, **caractérisé en ce que** lesdits embouts de fermeture (131, 132) sont solidarisés audit rail par clippage et/ou vissage.

4. Dispositif d'obturation selon l'une quelconque des revendications 1 à 3, **caractérisé en ce que** ladite première extrémité forme une boucle (51) autour d'un doigt (52) de maintien formé dans ledit embout (131, 132).

5. Dispositif d'obturation selon l'une quelconque des revendications 1 à 4, **caractérisé en ce qu'**au moins un desdits embouts (131, 132) est solidaire d'un second élément souple ou semi-rigide (61, 62) s'étendant jusqu'à un embout d'un deuxième rail, de façon à relier les deux rails.

6. Dispositif d'obturation selon l'une quelconque des revendications 1 à 5, **caractérisé en ce qu'**au moins un desdits rails et/ou ledit panneau coulissant porte des moyens anti-dégondage (72), empêchant la désolidarisation dudit rail et dudit panneau coulissant.

7. Dispositif d'obturation selon la revendication 6, **caractérisé en ce que** lesdits moyens anti-dégondage (72) comprennent des éléments complémentaires (72, 73, 75, 76, 77), formés d'une part sur ledit rail et d'autre part sur un cadre (34) dudit panneau coulissant, de façon à supprimer ou limiter au moins un degré de liberté entre ledit rail et ledit cadre.

8. Dispositif d'obturation selon l'une quelconque des revendications 6 et 7, **caractérisé en ce que** lesdits moyens anti-dégondage (72) comprennent des éléments complémentaires (72, 73, 75, 76, 77), formés d'une part sur ledit rail et d'autre part sur un support de louvoiement (371, 372, 373), solidaire du cadre (34) dudit panneau coulissant, de façon à supprimer ou limiter les degrés de liberté entre ces deux éléments, sauf selon l'axe de coulissement.

9. Dispositif d'obturation selon l'une quelconque des revendications 1 à 8, **caractérisé en ce qu'**un joint perméable (32) est placé entre ladite partie fixe et ledit rail inférieur.

10. Dispositif d'obturation selon la revendication 9, **caractérisé en ce que** ledit joint (32) est réalisé en mousse à cellules ouvertes.

11. Dispositif d'obturation selon l'une quelconque des revendications 9 et 10, **caractérisé en ce que** ledit joint (32) est placé au-dessus d'au moins un passage d'eau (81) percé dans ladite partie fixe.

12. Véhicule automobile **caractérisé en ce qu'**il comprend au moins un dispositif d'obturation selon l'une quelconque des revendications 1 à 11, comprenant une partie fixe (11) essentiellement plane, dans laquelle est définie une ouverture, et au moins un panneau coulissant (12) guidé le long de deux rails (114, 115) montés sur une face dudit panneau fixe, entre au moins une position de fermeture, obturant ladite ouverture, et une position d'ouverture, libérant ladite ouverture, **caractérisé en ce qu'**au moins un desdits rails (114, 115) porte, à chacune de ses extrémités, un embout de fermeture (131, 132) auquel est solidarisée une première extrémité d'un premier élément souple ou semi-rigide (141, 142) dont la seconde extrémité est destinée à être solidarisée à la structure dudit véhicule.

## Patentansprüche

1. Verschlussvorrichtung für eine Öffnung, die in einer Struktur (111) eingerichtet ist, die einen im Wesentlichen flachen ebenen Teil (11), in dem eine Öffnung definiert ist, und mindestens eine gleitende Platte (12) aufweist, die entlang zweier Schienen (114, 115), die auf einer Seite der festen Platte montiert sind, zwischen einer Verschlussposition, in der die Öffnung verschlossen ist, und einer Öffnungsposition, in der die Öffnung freigegeben ist, geführt wird, **dadurch gekennzeichnet, dass** mindestens eine der Schienen (114, 115) an jedem ihrer Enden einen Verschlussansatz (131, 132) trägt, mit dem ein erstes Ende eines ersten biegsamen oder halbsteifen Elements (141, 142) verbunden ist, dessen zweites Ende dazu vorgesehen ist, mit der Struktur (111) verbunden zu werden, wobei das biegsame oder halbsteife Element derart dimensioniert ist, dass das zweite Ende an den Rand der Öffnung mit Hilfe einer Kleberschnur geklebt werden kann, die dazu vorgesehen ist, den festen Teil mit der Struktur zu verbinden, ,
und wobei das biegsame oder halbsteife Element (141, 142) ein Gurt, ein Seil, ein bewehrtes Gewebeband oder ein mit einer Metallbewehrung versehenes Band ist.

2. Verschlussvorrichtung nach Anspruch 1, **dadurch gekennzeichnet, dass** die Schiene (114, 115) in einem Profil hergestellt ist, das auf verschiedene Längen geschnitten werden kann.

3. Verschlussvorrichtung nach einem der Ansprüche 1 bis 2, **dadurch gekennzeichnet, dass** die Verschlussansätze (131, 132) mit der Schiene durch Clipsen und/oder Schrauben verbunden sind.

4. Verschlussvorrichtung nach einem der Ansprüche 1 bis 3, **dadurch gekennzeichnet, dass** das erste Ende eine Schlinge (51) um einen Haltefinger (52) bildet, der in dem Ansatz (131, 132) ausgebildet ist.

5. Verschlussvorrichtung nach einem der Ansprüche 1 bis 4, **dadurch gekennzeichnet, dass** mindestens einer der Ansätze (131, 132) mit einem zweiten biegsamen oder halbsteifen Element (61, 62) verbunden ist, das sich bis zu einem Ansatz einer zweiten Schiene erstreckt, um die beiden Schienen zu verbinden.

6. Verschlussvorrichtung nach einem der Ansprüche 1 bis 5, **dadurch gekennzeichnet, dass** mindestens eine der Schienen und/oder die gleitende Platte Aushebelsicherungen (72) trägt, die das Lösen der Schiene von der Gleitplatte verhindern.

7. Verschlussvorrichtung nach Anspruch 6, **dadurch gekennzeichnet, dass** die Aushebelsicherungen (72) komplementäre Elemente (72, 73, 75, 76, 77) aufweisen, die einerseits auf der Schiene und andererseits auf einem Rahmen (34) der Gleitplatte ausgebildet sind, um mindestens einen Freiheitsgrad zwischen der Schiene und dem Rahmen zu unterdrücken oder zu begrenzen.

8. Verschlussvorrichtung nach einem der Ansprüche 6 und 7, **dadurch gekennzeichnet, dass** die Aushebelsicherungen (72) komplementäre Elemente (72, 73, 75, 76, 77) umfassen, die einerseits auf der Schiene und andererseits auf einem Schwenklager (371, 372, 373), das mit dem Rahmen (34) der Gleitplatte verbunden ist, ausgebildet sind, um die Freiheitsgrade zwischen diesen beiden Elementen außer entlang der Gleitachse zu unterdrücken oder zu begrenzen.

9. Verschlussvorrichtung nach einem der Ansprüche 1 bis 8, **dadurch gekennzeichnet, dass** eine durchlässige Dichtung (32) zwischen dem festen Teil und der unteren Schiene angeordnet ist.

10. Verschlussvorrichtung nach Anspruch 9, **dadurch gekennzeichnet, dass** die Dichtung (32) aus einem offenporigen Schaumstoff hergestellt ist.

11. Verschlussvorrichtung nach einem der Ansprüche 9 und 10, **dadurch gekennzeichnet, dass** die Dichtung (32) über mindestens einem Wasserdurchgang (81) angeordnet ist, der in den festen Teil eingearbeitet ist.

12. Kraftfahrzeug, **dadurch gekennzeichnet, dass** es mindestens eine Verschlussvorrichtung nach einem der Ansprüche 1 bis 11 besitzt, die einen im Wesentlichen ebenen festen Teil (11), in dem eine Öffnung definiert ist, und mindestens eine gleitende Platte (12) aufweist, die entlang zweier Schienen (114, 115), die auf einer Seite der festen Platte montiert sind, zwischen mindestens einer Verschlussposition, in der die Öffnung verschlossen ist, und einer Öffnungsposition, in der die Öffnung freigegeben ist, geführt wird, **dadurch gekennzeichnet, dass** mindestens eine der Schienen (114, 115) an jedem ihrer Enden einen Verschlussansatz (131, 132) aufweist, mit dem ein erstes Ende eines ersten biegsamen oder halbsteifen Elements (141, 142) verbunden ist, dessen zweites Ende dazu vorgesehen ist, mit der Struktur des Fahrzeugs verbunden zu werden.

## Claims

1. Device for closing off an opening arranged within a structure (111), comprising a fixed, essentially plane, part (11) within which an aperture is defined, and at least one sliding panel (12) which is guided along two rails (114, 115) mounted on one face of said fixed panel, between at least one closing position which closes off said aperture, and an opening position which unblocks said aperture,
**characterised in that** at least one of said rails (114, 115) carries, at each of its ends, a closing end-piece (131, 132) to which is fixedly joined a first end of a first flexible or semi-rigid element (141, 142), the second end of which is intended to be fixedly joined to said structure (111), said flexible or semi-rigid element being dimensioned in such a way that said second end can be glued to the edge of said opening with the aid of a bead of glue which is intended to fixedly join said fixed part to said structure,
and said flexible or semi-rigid element (141, 142) being a strap, a cable, a strip of reinforced fabric or a link equipped with a metal framework.

2. Closing-off device according to Claim 1, **characterised in that** said rail (114, 115) is produced in a structural metal element which is capable of being cut out to different lengths.

3. Closing-off device according to either of Claims 1 or 2, **characterised in that** said closing end-pieces (131, 132) are fixedly joined to said rail by clipping and/or screwing.

4. Closing-off device according to any of Claims 1 to 3, **characterised in that** said first end forms a loop (51) around a retaining finger (52) formed within said end-piece (131, 132).

5. Closing-off device according to any of Claims 1 to 4, **characterised in that** at least one of said end-pieces (131, 132) is fixedly joined to a second flexible or semi-rigid element (61, 62) which extends as far as an end-piece of a second rail, in such a way as to connect the two rails.

6. Closing-off device according to any of Claims 1 to 5, **characterised in that** at least one of said rails and/or said sliding panel carries anti-unhinging means (72) which prevent the detachment of said rail and said sliding panel.

7. Closing-off device according to Claim 6, **characterised in that** said anti-unhinging means (72) comprise complementary elements (72, 73, 75, 76, 77) which are formed, on the one hand, on said rail and, on the other hand, on a frame (34) belonging to said sliding panel, in such a way as to eliminate or limit at least one degree of freedom between said rail and said frame.

8. Closing-off device according to either of Claims 6 or 7, **characterised in that** said anti-unhinging means (72) comprise complementary elements (72, 73, 75, 76, 77) which are formed, on the one hand, on said rail and, on the other hand, on a sway support (371, 372, 373) which is fixedly joined to the frame (34) of said sliding panel, in such a way as to eliminate or limit the degrees of freedom between these two elements, except along the axis of sliding.

9. Closing-off device according to any of Claims 1 to 8, **characterised in that** a permeable seal (32) is placed between said fixed part and said lower rail.

10. Closing-off device according to Claim 9, **characterised in that** said seal (32) is made of open-cell foam.

11. Closing-off device according to either of Claims 9 or 10, **characterised in that** said seal (32) is placed above at least one passageway for water (81) which is drilled in said fixed part.

12. Motor vehicle, **characterised in that** it comprises at least one closing-off device according to any of Claims 1 to 11, comprising a fixed, essentially plane, part(11) within which an aperture is defined, and at least one sliding panel (12) which is guided along two rails (114, 115) mounted on one face of said fixed panel, between at least one closing position which closes off said aperture, and an opening position which unblocks said aperture, **characterised in that** at least one of said rails (114, 115) carries, at each of its ends, a closing end-piece (131, 132) to which is fixedly joined a first end of a first flexible or semi-rigid element (141, 142), the second end of which is intended to be fixedly joined to the structure of said vehicle.
